(19) Europäisches Patentamt
European Patent Office
Office européen des brevets

(11) **EP 4 181 420 A1**

(12) **EUROPEAN PATENT APPLICATION**

(43) Date of publication:
**17.05.2023 Bulletin 2023/20**

(21) Application number: **22206961.9**

(22) Date of filing: **11.11.2022**

(51) International Patent Classification (IPC):
**H04B 7/185** (2006.01)　　　　**H04W 56/00** (2009.01)

(52) Cooperative Patent Classification (CPC):
**H04B 7/18513; H04W 56/0055**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.11.2021　IN 202121051977**
**04.11.2022　US 202218052714**

(71) Applicant: **Mavenir Systems, Inc.**
**Richardson, TX 75081 (US)**

(72) Inventors:
• **MISHRA, Abish**
**560045 Bangalore (IN)**
• **GUCHHAIT, Atanu**
**560024 Bangalore (IN)**

(74) Representative: **Studio Torta S.p.A.**
**Via Viotti, 9**
**10121 Torino (IT)**

(54) **NPDCCH MONITORING RESTRICTIONS FOR NBIOT-NTN SYSTEMS**

(57)　A method of optimizing a monitoring time window of NB-IoT physical downlink control channel (NPDCCH) for one of i) narrow-band Internet-of-things (NB-IoT) for non-terrestrial network (NTN) including a satellite and a base station, or ii) 5th Generation New Radio NTN includes: receiving, by a user equipment (UE), a specified signal $K_{mac}$ transmitted by the base station, wherein the specified signal $K_{mac}$ enables the UE to calculate a signal transmission round-trip time (RTT) between the UE and the base station via the satellite; and adjusting, based on the specified signal $K_{mac}$, NPDCCH monitoring time window when the UE does not need to monitor a downlink (DL) signal transmitted by the base station in response to an uplink (UL) transmission. The signal RTT is equal to the sum of UE's $T_{TA}$ (timing offset between the start of a received downlink subframe and a transmitted uplink subframe) and $K_{mac}$.

FIG. 2

Processed by Luminess, 75001 PARIS (FR)

EP 4 181 420 A1

**Description**

**BACKGROUND OF THE DISCLOSURE**

**1. Field of the Disclosure**

The present disclosure relates to 5th Generation (5G) New Radio (NR) non-terrestrial network (NTN) operation, and relates more particularly to monitoring the downlink control signal in Narrow-Band Internet-of-Things (NB-IoT) for NTN.

**2. Description of the Related Art**

NB-IoT physical downlink control channel (NPDCCH) is used to carry Downlink Control Information (DCI). Some examples of information contained in DCI include uplink (UL) grant information and downlink (DL) scheduling information.

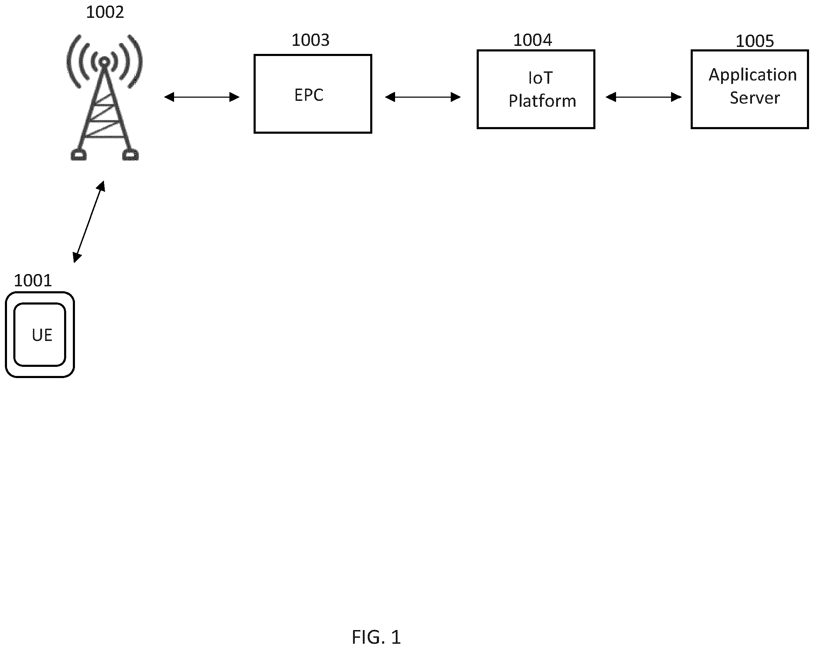

In legacy (traditional) terrestrial networks (TNs), an example of which is illustrated in FIG. 1, the propagation delay between UE and enB/gNB (which can be alternatively referenced as a "base station") is less than 1 msec, as the distance between a user equipment (UE) and eNB would be around 40 KM for the NBIOT case. For NTNs, the propagation delay between UE and eNB would be much larger than 1 msec, as the distance between UE and a GEO satellite and GEO satellite to eNB/gNB would be around 35786 Km. Therefore, in IoT NTN networks, because of the large propagation delays, the duration for which the UE does not need to monitor any DL signal in response to UL transmission needs to be updated compared to traditional terrestrial networks.

Therefore, there is a need to optimize and update the DL monitoring restriction for the UE in IoT NTN networks to improve UE performance.

**SUMMARY OF THE DISCLOSURE**

According to an example embodiment of the present disclosure, a method of optimizing the monitoring time window conditions or restrictions of NPDCCH for NBIOT-NTN is provided, which optimization enables UE to reduce power consumption by no longer requiring monitoring of NPDCCH for a dispensable duration.

According to an example embodiment of the present disclosure, the changes that need to be made for NPDCCH monitoring restriction are provided for the case where UE does not need to monitor incoming DL signal which is transmitted by the gNB/eNB in response to UL transmissions.

For an example scenario involving NB-IoT Physical Uplink Shared Channel (NPUSCH) with the same hybrid automatic repeat request (HARQ) process when 2 HARQs are configured, if an NB-IoT UE is configured with higher layer parameter *twoHARQ-ProcessesConfig.,* and if the UE has an NPUSCH transmission ending in subframe n, then at least one of: 1) the UE is not required to receive transmissions in the Type B half-duplex guard periods for FDD; and 2) the UE is not expected to receive an NPDCCH with DCI format N0/N1 for the same HARQ process ID as the NPUSCH transmission in any subframe starting from subframe $n+1-n_{TA}^{UE}$ to subframe n+3+$K_{mac}$, *where* $n_{TA}^{UE} = ceil(N_{TA,UE-specific})$.

For an example scenario relating to monitoring restrictions involving subframe after NPUSCH processing, if the UE is not using higher layer parameter *edt-Parameters* or if the UE is using higher layer parameter *edt-Parameters* and $0 \leq I_{MCS} \leq 2$ , ($I_{MCS}$ is the modulation and coding scheme field read from the DCI), then: if the NB-IoT UE has a NPUSCH transmission ending in subframe n , the UE is not required to monitor NPDCCH in any subframe starting from subframe $n+1-n_{TA}^{UE}$ to subframe n+3+$K_{mac}$, where $n_{TA}^{UE} = ceil(N_{TA,UE-specific})$ ,

For an example scenario relates to monitoring restrictions involving subframe after NPUSCH carrying Message 3 (Msg3), if the NB-IoT UE has an NPUSCH transmission for Msg3 ending in subframe n'with transport block size $TBS_{Msg3}$, whereas if maximum transport block size $TBS_{Msg3,max}$ for Msg3 would have been selected the NPUSCH transmission would have ended in subframe n, the UE is not required to monitor NPDCCH in any subframe starting from subframe $n'+1-n_{TA}^{UE}$ to subframe n+3+$K_{mac}$, where $n_{TA}^{UE} = ceil(N_{TA,UE-specific})$ .

For an example scenario relating to Narrowband Physical Random-Access Channel (NPRACH) for scheduling request (SR) involved in a long NPRACH transmission, for an NB-IoT UE configured with higher layer parameter *sr-WithoutHARQ-ACK-Config,* if the transmission of a narrowband random access preamble for SR ends on subframe n, then: in case of frame structure type 1 with NPRACH format 0 and 1 when the number of NPRACH repetitions is greater than or equal to 64, or NPRACH format 2 when the number of NPRACH repetitions is greater than or equal to 16, the UE is not required to monitor NPDCCH UE-specific search space from subframe $n - n_{TA}^{UE}$ to subframe n+40+$K_{mac}$, where $n_{TA}^{UE} = ceil(N_{TA,UE-specific})$.

For an example scenario relating to Narrowband Physical Random-Access Channel (NPRACH) for scheduling request (SR) involved in a short NPRACH transmission, for an NB-IoT UE configured with higher layer parameter *sr-WithoutHARQ-ACK-Config,* unless the transmission of a narrowband random access preamble for SR ends on subframe n, the UE is not required to monitor NPDCCH UE-specific search space from subframe $n - n_{TA}^{UE}$ to subframe n+3+$K_{mac}$, where $n_{TA}^{UE} = ceil(N_{TA,UE-specific})$.

## BRIEF DESCRIPTION OF THE FIGURES

FIG. 1 is a diagram illustrating an example propagation delay between UE and eNB/gNB in a terrestrial network (TN).

FIG. 2 is a diagram illustrating an example propagation delay between UE and eNB/gNB in NTN.

## DETAILED DESCRIPTION

FIG. 1 is a diagram illustrating an example legacy terrestrial network (TN), which includes UE 1001, eNB/gNB 1002, evolved packet core (EPC) 1003, internet of things (IoT) platform 1004, and application server 1005. In the example legacy TN shown in FIG. 1, the propagation delay between UE 1001 and eNB/gNB 1002 is typically less than 1 msec (as the distance between UE and eNB would be around 40 KM for the typical NBIOT scenario).

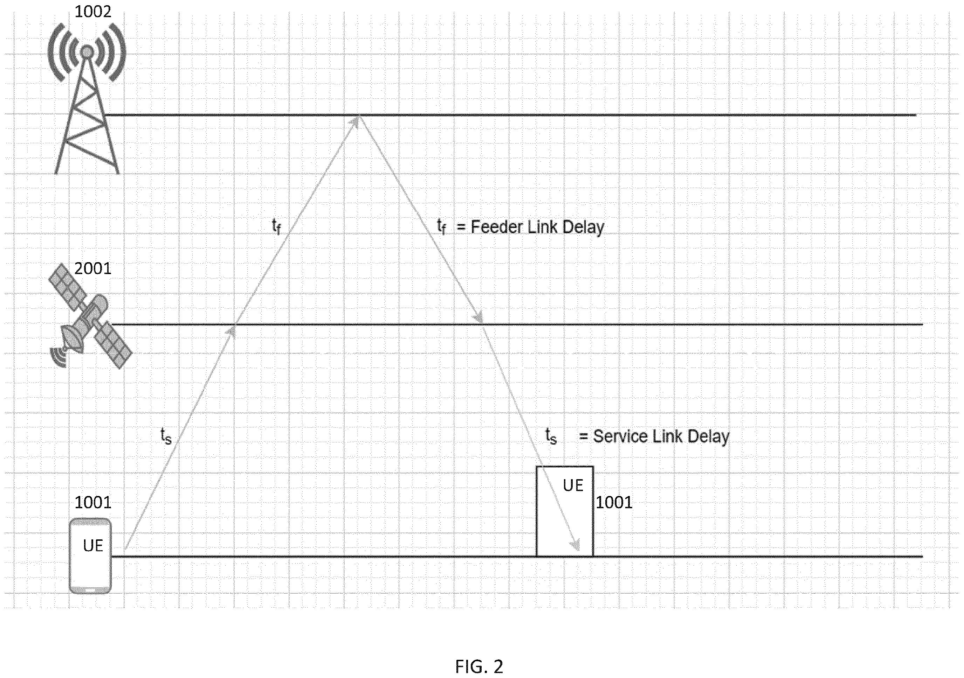

FIG. 2 illustrates an example propagation delay between UE and eNB/gNB in NTN, which NTN includes a GEO satellite 2001 and an eNB/gNB 1002. For the NTN shown in FIG. 2, the propagation delay between UE 1001 and eNB/gNB 1002 would be much larger than 1 msec, as the total distance starting from UE 1001 to a GEO satellite 2001, then to eNB/gNB 1002 would be around 35786 Km, for example. Considering the long propagation delays in NTN, the existing NPDCCH monitoring restrictions need to be optimized and updated where UE is not required to monitor NPDCCH.

In connection with FIG. 2, some parameters relevant to the NTN delay will be explained here. Feeder-link delay, denoted as $t_f$, refers to one-way over-the-air (OTA) delay between the eNB/gNB 1002 and the satellite 2001. Service-link delay, denoted as $t_s$, refers to one-way OTA delay between the satellite 2001 and UE 1001. Timing advance, TA, is a UE offset between the start of a received downlink subframe and a transmitted uplink subframe, which offset at the UE is necessary to ensure that downlink and uplink subframes are synchronized with the eNB. $T_{TA}$ denotes the time length of the TA. $K_{offset}$, which is in the unit of subframes, refers to an integer which is signaled (e.g., by the eNB/gNB) to the UE and is used by the UE to delay transmission time of a UL transmission which is triggered by a DL reception at the UE so that the causality of the UE operation is guaranteed. $K_{offset}$ should always satisfy the condition $K_{offset} \geq T_{TA}/1ms$. $K_{mac}$ is an integer which is signaled (e.g., by the eNB/gNB) to the UE and is used by the UE to calculate RTT between the UE and the eNB/gNB.

In the following sections, the proposed changes for optimizing the NPDCCH monitoring restrictions are discussed for various scenarios. UE-specific TA will be used by UE in connected mode before UL transmission. $n_{TA}^{UE}$ is the UE-specific TA in the unit of subframes, and $n_{TA}^{UE} = ceil(N_{TA,UE-specific})$ in msec (any floating value will be converted to upper integer value, e.g., ceil(3.23) = 4). The estimate of UE to eNB/gNB (base station) round trip time (RTT) is equal to the sum of UE's $T_{TA}$ and $K_{mac}$, where UE's $T_{TA}$ is represented by the following formula:

$$T_{TA} = \left(N_{TA} + N_{TA,UE-specific} + N_{TA,common} + N_{TA,offset}\right) \times T_s$$

In the above formular, the various variables are defined as follows:

a) $N_{TA}$ is timing offset between uplink and downlink radio frames at the UE, expressed in units of $T_s$. $N_{TA}$ works in the same way as legacy terrestrial networks. It is part of closed-loop uplink timing correction procedure. The amount of timing advance is being estimated by the eNB and the value is being communicated to UE in timing advance command.

b) $N_{TA,UE\text{-}specific}$ is UE-self-estimated TA to pre-compensate for the service link delay between the UE and the satellite. It is computed by the UE based on satellite-ephemeris-related higher-layers parameters if configured, otherwise $N_{TA,UE\text{-}specific} = 0$.

c) $N_{TA,common}$ is network-controlled (or network-specified) common TA, and may include any timing offset considered necessary by the network (e.g., feeder link delay). It is derived from the higher-layer parameters *TACommon, TACommonDrift, and TACommonDriftVariation* if configured, otherwise $N_{TA,common} = 0$. These parameters are given to the UE in SIB31-NB.

d) $N_{TA,offset}$ is Fixed timing advance offset, expressed in units of $T_s$. For frame structure type 1, $N_{TA,offset} = 0$.

e) $T_s$ is basic unit of time expressed in millisecond (msec). Therefore, the granularity of $T_{TA}$ is 1 $\boldsymbol{T_s}$, i.e., 1 msec.

In the present disclosure, several example optimization changes (relative to existing configuration restrictions in Terrestrial Network) are provided, e.g., to 3GPP TS36.213 version 16.6, to accommodate the impact of UE-eNB RTT.

**Example Scenario A:**

This example scenario involves NB-IoT Physical Uplink Shared Channel (NPUSCH) with the same hybrid automatic repeat request (HARQ) process when 2 HARQs are configured. As a point of reference, the existing configuration restrictions (e.g., 3GPP TS36.213 version 16.6) in a Terrestrial Network (TN) provide that, if an NB-IoT UE is configured with higher layer parameter *twoHARQ-ProcessesConfig.,* and if the UE has an NPUSCH transmission ending in subframe n, then: 1) the UE is not required to receive transmissions in the Type B half-duplex guard periods for frequency division duplex (FDD); and 2) the UE is not expected to receive an NB-IoT Physical Downlink Control Channel (NPDCCH) with downlink control information (DCI) format N0/N1 for the same HARQ process ID as the NPUSCH transmission in any subframe starting from subframe n+1 to subframe n+3.

In contrast, for NTN, the UE DL Acknowledgement (ACK)/Negative Acknowledgement (NACK) monitoring restrictions are modified for this example scenario. The HARQ-ACK timing in response to NPUSCH transmission is $n+4+K_{mac}$. The DL subframe $n+3+K_{mac}$ corresponds to the subframe immediately before HARQ-ACK. Also, it should be noted that the DL subframe $n+1-n_{TA}^{UE}$ starts immediately after UL subframe n. Therefore, the below-described changes need to be applied to the existing specifications, e.g., to 3GPP TS36.213 version 16.6, to properly accommodate the RTT between the UE and eNB. If an NB-IoT UE is configured with higher layer parameter *twoHARQ-ProcessesConfig.,* and if the UE has an NPUSCH transmission ending in subframe n, then at least one of: 1) the UE is not required to receive transmissions in the Type B half-duplex guard periods for FDD; and 2) the UE is not expected to receive an NPDCCH with DCI format N0/N1 for the same HARQ process ID as the NPUSCH transmission in any subframe starting from subframe $n+1-n_{TA}^{UE}$ to subframe $n+3+K_{mac}$, where $n_{TA}^{UE} = ceil(N_{TA,UE-specific})$ .

**Example Scenario B:**

This example scenario relates to monitoring restrictions involving subframe after NPUSCH processing. As a point of reference, the existing configuration restrictions (e.g., 3GPP TS36.213 version 16.6) in a Terrestrial Network (TN) provide that, if the UE is not using higher layer parameter *edt-Parameters* or if the UE is using higher layer parameter *edt-Parameters* and $0 \leq I_{MCS} \leq 2$ , ($I_{MCS}$ is the modulation and coding scheme field read from the DCI), then: if the NB-IoT UE has a NPUSCH transmission ending in subframe n , the UE is not required to monitor NPDCCH in any subframe starting from subframe n+1 to subframe n+3.

In contrast, for NTN, the UE DL monitoring restrictions are modified for this example scenario, i.e., the below-described changes need to be applied to the existing specifications, e.g., to 3GPP TS36.213 version 16.6, to properly accommodate the RTT between the UE and eNB. If the UE is not using higher layer parameter *edt-Parameters* or if the UE is using higher layer parameter *edt-Parameters* and $0 \leq I_{MCS} \leq 2$ , ($I_{MCS}$ is the modulation and coding scheme field read from the DCI), then: if the NB-IoT UE has a NPUSCH transmission ending in subframe n , the UE is not required to monitor NPDCCH in any subframe starting from subframe $n{+}1 - n_{TA}^{UE}$ to subframe n+3+$K_{mac}$, where

$$n_{TA}^{UE} = ceil(N_{TA,UE-specific})$$.

## Example Scenario C:

This example scenario relates to monitoring restrictions involving subframe after NPUSCH carrying Message 3 (Msg3). As a point of reference, the existing configuration restrictions (e.g., 3GPP TS36.213 version 16.6) in a Terrestrial Network (TN) provide that, if the NB-IoT UE has an NPUSCH transmission for Msg3 ending in subframe n'with transport block size $TBS_{Msg3}$, whereas if maximum transport block size $TBS_{Msg3,max}$ for Msg3 would have been selected the NPUSCH transmission would have ended in subframe n, the UE is not required to monitor NPDCCH in any subframe starting from subframe n'+1 to subframe n+3.

In contrast, for NTN, the UE DL monitoring restrictions are modified for this example scenario, i.e., the below-described changes need to be applied to the existing specifications, e.g., to 3GPP TS36.213 version 16.6, to properly accommodate the RTT between the UE and eNB. If the NB-IoT UE has an NPUSCH transmission for Msg3 ending in subframe n'with transport block size $TBS_{Msg3}$, whereas if maximum transport block size $TBS_{Msg3,max}$ for Msg3 would have been selected the NPUSCH transmission would have ended in subframe n, the UE is not required to monitor NPDCCH in any subframe starting from subframe $n'{+}1 - n_{TA}^{UE}$ to subframe n+3+$K_{mac}$, where

$$n_{TA}^{UE} = ceil(N_{TA,UE-specific})$$.

## Example Scenario D:

This example scenario relates to Narrowband Physical Random-Access Channel (NPRACH) for scheduling request (SR) involved in long NPRACH transmission. As a point of reference, the existing configuration restrictions (e.g., 3GPP TS36.213 version 16.6) in a Terrestrial Network (TN) provide that, for an NB-IoT UE configured with higher layer parameter *sr-WithoutHARQ-ACK-Config,* if the transmission of a narrowband random access preamble for SR ends on subframe n, then: in case of frame structure type 1 with NPRACH format 0 and 1 when the number of NPRACH repetitions is greater than or equal to 64, or NPRACH format 2 when the number of NPRACH repetitions is greater than or equal to 16, the UE is not required to monitor NPDCCH UE-specific search space from subframe n to subframe n+40.

In contrast, for NTN, the UE DL monitoring restrictions are modified for this example scenario, i.e., the below-described changes need to be applied to the existing specifications, e.g., to 3GPP TS36.213 version 16.6, to properly accommodate the RTT between the UE and eNB. For an NB-IoT UE configured with higher layer parameter *sr-WithoutHARQ-ACK-Config,* if the transmission of a narrowband random access preamble for SR ends on subframe n, then: in case of frame structure type 1 with NPRACH format 0 and 1 when the number of NPRACH repetitions is greater than or equal to 64, or NPRACH format 2 when the number of NPRACH repetitions is greater than or equal to 16, the UE is not required to monitor NPDCCH UE-specific search space from subframe $n - n_{TA}^{UE}$ to subframe n+40+$K_{mac}$, where

$$n_{TA}^{UE} = ceil(N_{TA,UE-specific})$$.

## Example Scenario E:

This example scenario relates to Narrowband Physical Random-Access Channel (NPRACH) for scheduling request (SR) involved in short NPRACH transmission. As a point of reference, the existing configuration restrictions (e.g., 3GPP TS36.213 version 16.6) in a Terrestrial Network (TN) provide that, for an NB-IoT UE configured with higher layer parameter *sr-WithoutHARQ-ACK-Config,* unless the transmission of a narrowband random access preamble for SR ends on subframe n, the UE is not required to monitor NPDCCH UE-specific search space from subframe n to subframe n+3.

In contrast, for NTN, the UE DL monitoring restrictions are modified for this example scenario, i.e., the below-described changes need to be applied to the existing specifications, e.g., to 3GPP TS36.213 version 16.6, to properly accommodate the RTT between the UE and eNB. For an NB-IoT UE configured with higher layer parameter *sr-WithoutHARQ-ACK-Config,* unless the transmission of a narrowband random access preamble for SR ends on subframe n, the UE is not required to monitor NPDCCH UE-specific search space from subframe $n - n_{TA}^{UE}$ to subframe $n+3+K_{mac}$,

where $n_{TA}^{UE} = ceil(N_{TA,UE-specific})$ .

According to the example embodiments of the present disclosure, impact of $K_{mac}$ timing is taken into consideration for optimizing the monitoring window for DL reception at UE. The disclosed example embodiments of system optimization will help UEs reduce power consumption as UEs will not be required to monitor for DL signal for a longer duration.

Although the example embodiments of the present disclosure have been described in the context of NB-IoT for NTN operation, the present disclosure is equally applicable to 5G NR NTN operation, e.g., LTE Machine Type Communication (LTE-M) technology, and .

Abbreviations:

3GPP: 3rd Generation Partnership Project
5GC: 5G Core
eNB: evolved Node B
FDD: frequency division duplex
gNB: next generation Node B
HARQ: Hybrid automatic repeat request
LTE: Long Term Evolution
MIB: Master Information Block
NPDCCH: NB-IoT Physical Downlink Control Channel
NPUSCH: NB-IoT Physical Uplink Shared Channel
NTN - Non Terrestrial Network
NR: 5G New Radio
PDCP: Packet Data Convergence Protocol
PHY: Physical layer
PNF: Physical Network Function
PRACH: Physical Random Access Channel
RAN: Radio Access Network
RAT: Radio Access Technology
RF: Radio Frequency
RLC: Radio Link Control
RRC: Radio Resource Control
RRM: Radio Resource Management
SIB: System Information Block
UE: User Equipment

**Claims**

1. A method of optimizing a monitoring time window of NB-IoT physical downlink control channel (NPDCCH) for one of i) narrow-band Internet-of-things (NB-IoT) for non-terrestrial network (NTN) including a satellite and a base station, or ii) 5th Generation New Radio NTN, the method comprising:

   receiving, by a user equipment (UE), a specified signal transmitted by the base station, wherein the specified signal enables the UE to calculate a signal transmission round-trip time between the UE and the base station via the satellite; and
   adjusting, based on the specified signal, NPDCCH monitoring time window when the UE does not need to monitor a downlink (DL) signal transmitted by the base station in response to an uplink (UL) transmission.

2. The method according to claim 1, wherein the specified signal is $K_{mac}$ representing an integer.

3. The method according to claim 2, wherein:

the signal transmission round-trip time between the UE and the base station via the satellite is equal to the sum of UE's $T_{TA}$ and $K_{mac}$;

UE's $T_{TA}$ is defined as a length of time of timing advance, TA, which TA is a UE offset between the start of a received downlink subframe and a transmitted uplink subframe, and $T_{TA}$ is represented by the following formula:

$$T_{TA} = \left(N_{TA} + N_{TA,UE-specific} + N_{TA,common} + N_{TA,offset}\right) \times T_s$$

$T_s$ is a unit of time expressed in millisecond (msec);

$N_{TA}$ is timing offset between uplink and downlink radio frames at the UE, expressed in units of $T_s$;

$N_{TA,UE-specific}$ is UE-self-estimated TA to pre-compensate for the service link delay between the satellite and the UE;

$N_{TA,common}$ is network-specified TA; and

$N_{TA,offset}$ is a fixed timing advance offset, expressed in units of $T_s$.

4. The method according to claim 3, wherein the method is for optimizing the monitoring time window of NPDCCH for NB-IoT NTN.

5. The method of claim 3, further comprising:
   receiving, by the UE, a second specified signal $K_{offse}$ transmitted by the base station, wherein $K_{offset}$ represents units of subframes, and wherein $K_{offset}$ is used by the UE to delay transmission time of a UL transmission which is triggered by a DL reception.

6. The method according to claim 3, wherein:
   in the case NB-IoT Physical Uplink Shared Channel (NPUSCH) with the same hybrid automatic repeat request (HARQ) process when 2 HARQs are configured, if an NB-IoT UE is configured with parameter *twoHARQ-ProcessesConfig.,* and if the UE has an NPUSCH transmission ending in subframe n, then at least one of: 1) the UE is not required to receive transmissions in the Type B half-duplex guard periods for FDD; and 2) the UE is not expected to receive an NPDCCH with DCI format NO/N1 for the same HARQ process ID as the NPUSCH transmission in any subframe starting from subframe $n+1- n_{TA}^{UE}$ to subframe $n+3+K_{mac}$, wherein $n_{TA}^{UE} = ceil(N_{TA,UE-specific})$.

7. The method of claim 3, wherein:
   in the case of monitoring restrictions involving subframe after NB-IoT Physical Uplink Shared Channel (NPUSCH) processing, if one of i) the UE is not using parameter *edt-Parameters* or ii) the UE is using parameter *edt-Parameters* and $0 \leq I_{MCS} \leq 2$, wherein $I_{MCS}$ is a modulation and coding scheme field, then: if the UE has an NPUSCH transmission ending in subframe n, the UE is not required to monitor NPDCCH in any subframe starting from subframe $n+1- n_{TA}^{UE}$ to subframe $n+3+K_{mac}$, wherein $n_{TA}^{UE} = ceil(N_{TA,UE-specific})$.

8. The method of claim 3, wherein:
   in the case of monitoring restrictions involving subframe after NB-IoT Physical Uplink Shared Channel (NPUSCH) carrying Message 3 (Msg3), if the UE has an NPUSCH transmission for Msg3 ending in subframe n' with transport block size $TBS_{Msg3}$, whereas if maximum transport block size $TBS_{Msg3,max}$ for Msg3 would have been selected the NPUSCH transmission would have ended in subframe n, the UE is not required to monitor NPDCCH in any subframe starting from subframe $n'+1- n_{TA}^{UE}$ to subframe $n+3+K_{mac}$, wherein $n_{TA}^{UE} = ceil(N_{TA,UE-specific})$.

9. The method of claim 3, wherein:
   in the case of Narrowband Physical Random-Access Channel (NPRACH) for scheduling request (SR) involved in a long NPRACH transmission, if the UE is configured with parameter sr-*WithoutHARQ-ACK-Config,* and if the transmission of a narrowband random access preamble for SR ends on subframe n, then: in case of frame structure type 1 with NPRACH format 0 and 1 when the number of NPRACH repetitions is greater than or equal to 64, or NPRACH format 2 when the number of NPRACH repetitions is greater than or equal to 16, the UE is not required to monitor NPDCCH UE-specific search space from subframe $n - n_{TA}^{UE}$ to subframe n+40+$K_{mac}$, wherein

$$n_{TA}^{UE} = ceil(N_{TA,UE-specific})$$ .

**10.** The method of claim 3, wherein:
in the case of Narrowband Physical Random-Access Channel (NPRACH) for scheduling request (SR) involved in a short NPRACH transmission, if the UE is configured with parameter sr-*WithoutHARQ-ACK-Config,* unless the transmission of a narrowband random access preamble for SR ends on subframe n, the UE is not required to monitor NPDCCH UE-specific search space from subframe $n - n_{TA}^{UE}$ to subframe n+3+$K_{mac}$, wherein

$$n_{TA}^{UE} = ceil(N_{TA,UE-specific})$$ .

**11.** The method according to claim 4, wherein:
in the case NB-IoT Physical Uplink Shared Channel (NPUSCH) with the same hybrid automatic repeat request (HARQ) process when 2 HARQs are configured, if an NB-IoT UE is configured with parameter *twoHARQ-ProcessesConfig.,* and if the UE has an NPUSCH transmission ending in subframe n, then at least one of: 1) the UE is not required to receive transmissions in the Type B half-duplex guard periods for FDD; and 2) the UE is not expected to receive an NPDCCH with DCI format NO/N1 for the same HARQ process ID as the NPUSCH transmission in any subframe starting from subframe $n+1 - n_{TA}^{UE}$ to subframe n+3+$K_{mac}$, wherein

$$n_{TA}^{UE} = ceil(N_{TA,UE-specific})$$ .

**12.** The method of claim 4, wherein:
in the case of monitoring restrictions involving subframe after NB-IoT Physical Uplink Shared Channel (NPUSCH) processing, if one of i) the UE is not using parameter *edt-Parameters* or ii) the UE is using parameter *edt-Parameters* and $0 \leq I_{MCS} \leq 2$ , wherein $I_{MCS}$ is a modulation and coding scheme field, then: if the UE has an NPUSCH transmission ending in subframe n , the UE is not required to monitor NPDCCH in any subframe starting from subframe $n+1 - n_{TA}^{UE}$ to subframe n+3+$K_{mac}$, wherein $n_{TA}^{UE} = ceil(N_{TA,UE-specific})$ .

**13.** The method of claim 4, wherein:
in the case of monitoring restrictions involving subframe after NB-IoT Physical Uplink Shared Channel (NPUSCH) carrying Message 3 (Msg3), if the UE has an NPUSCH transmission for Msg3 ending in subframe n' with transport block size $TBS_{Msg3}$, whereas if maximum transport block size $TBS_{Msg3,max}$ for Msg3 would have been selected the NPUSCH transmission would have ended in subframe n, the UE is not required to monitor NPDCCH in any subframe starting from subframe $n'+1 - n_{TA}^{UE}$ to subframe n+3+$K_{mac}$, wherein $n_{TA}^{UE} = ceil(N_{TA,UE-specific})$ .

**14.** The method of claim 4, wherein:
in the case of Narrowband Physical Random-Access Channel (NPRACH) for scheduling request (SR) involved in a long NPRACH transmission, if the UE is configured with parameter sr-*WithoutHARQ-ACK-Config,* and if the transmission of a narrowband random access preamble for SR ends on subframe n, then: in case of frame structure type 1 with NPRACH format 0 and 1 when the number of NPRACH repetitions is greater than or equal to 64, or NPRACH format 2 when the number of NPRACH repetitions is greater than or equal to 16, the UE is not required to monitor NPDCCH UE-specific search space from subframe $n - n_{TA}^{UE}$ to subframe n+40+$K_{mac}$, wherein

$$n_{TA}^{UE} = ceil(N_{TA,UE-specific})$$ .

**15.** The method of claim 4, wherein:
in the case of Narrowband Physical Random-Access Channel (NPRACH) for scheduling request (SR) involved in a short NPRACH transmission, if the UE is configured with parameter sr-*WithoutHARQ-ACK-Config,* unless the transmission of a narrowband random access preamble for SR ends on subframe n, the UE is not required to monitor NPDCCH UE-specific search space from subframe $n - n_{TA}^{UE}$ to subframe n+3+$K_{mac}$, wherein

$$n_{TA}^{UE} = ceil(N_{TA,UE-specific})$$ .

16. The method according to claim 5, wherein:
   in the case NB-IoT Physical Uplink Shared Channel (NPUSCH) with the same hybrid automatic repeat request (HARQ) process when 2 HARQs are configured, if an NB-IoT UE is configured with parameter *twoHARQ-ProcessesConfig.,* and if the UE has an NPUSCH transmission ending in subframe n, then at least one of: 1) the UE is not required to receive transmissions in the Type B half-duplex guard periods for FDD; and 2) the UE is not expected to receive an NPDCCH with DCI format N0/N1 for the same HARQ process ID as the NPUSCH transmission in any subframe starting from subframe $n+1 - n_{TA}^{UE}$ to subframe n+3+$K_{mac}$, wherein $n_{TA}^{UE} = ceil(N_{TA,UE-specific})$ .

17. The method of claim 5, wherein:
   in the case of monitoring restrictions involving subframe after NB-IoT Physical Uplink Shared Channel (NPUSCH) processing, if one of i) the UE is not using parameter *edt-Parameters* or ii) the UE is using parameter *edt-Parameters* and $0 \le I_{MCS} \le 2$ , wherein $I_{MCS}$ is a modulation and coding scheme field, then: if the UE has an NPUSCH transmission ending in subframe n , the UE is not required to monitor NPDCCH in any subframe starting from subframe $n+1 - n_{TA}^{UE}$ to subframe n+3+$K_{mac}$, wherein $n_{TA}^{UE} = ceil(N_{TA,UE-specific})$ .

18. The method of claim 5, wherein:
   in the case of monitoring restrictions involving subframe after NB-IoT Physical Uplink Shared Channel (NPUSCH) carrying Message 3 (Msg3), if the UE has an NPUSCH transmission for Msg3 ending in subframe n' with transport block size $TBS_{Msg3}$, whereas if maximum transport block size $TBS_{Msg3,max}$ for Msg3 would have been selected the NPUSCH transmission would have ended in subframe n, the UE is not required to monitor NPDCCH in any subframe starting from subframe $n'+1 - n_{TA}^{UE}$ to subframe n+3+$K_{mac}$, wherein $n_{TA}^{UE} = ceil(N_{TA,UE-specific})$ .

19. The method of claim 5, wherein:
   in the case of Narrowband Physical Random-Access Channel (NPRACH) for scheduling request (SR) involved in a long NPRACH transmission, if the UE is configured with parameter sr-*WithoutHARQ-ACK-Config,* and if the transmission of a narrowband random access preamble for SR ends on subframe n, then: in case of frame structure type 1 with NPRACH format 0 and 1 when the number of NPRACH repetitions is greater than or equal to 64, or NPRACH format 2 when the number of NPRACH repetitions is greater than or equal to 16, the UE is not required to monitor NPDCCH UE-specific search space from subframe $n - n_{TA}^{UE}$ to subframe n+40+$K_{mac}$, wherein

$$n_{TA}^{UE} = ceil(N_{TA,UE-specific})$$ .

20. The method of claim 5, wherein:
   in the case of Narrowband Physical Random-Access Channel (NPRACH) for scheduling request (SR) involved in a short NPRACH transmission, if the UE is configured with parameter sr-*WithoutHARQ-ACK-Config,* unless the transmission of a narrowband random access preamble for SR ends on subframe n, the UE is not required to monitor NPDCCH UE-specific search space from subframe $n - n_{TA}^{UE}$ to subframe n+3+$K_{mac}$, wherein

$$n_{TA}^{UE} = ceil(N_{TA,UE-specific})$$ .

FIG. 1

FIG. 2

Europäisches
Patentamt

European
Patent Office

Office européen
des brevets

# EUROPEAN SEARCH REPORT

**Application Number**

EP 22 20 6961

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | MODERATOR (SONY): "FL summary 3 of AI 8.14.2: Timing relationships for IoT-NTN", 3GPP DRAFT; R1-2202587, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20220221 - 20220303 4 March 2022 (2022-03-04), XP052122288, Retrieved from the Internet: URL:https://ftp.3gpp.org/tsg_ran/WG1_RL1/T SGR1_108-e/Docs/R1-2202587.zip R1-2202587_AI8_14_2_FL Summary IoT NTN Timing Relationships.docx [retrieved on 2022-03-04] * paragraph [2.4.5] * | 6-20 | INV. H04B7/185 H04W56/00 |
| X | HUAWEI ET AL: "Discussion on timing relationship enhancement for IoT in NTN", 3GPP DRAFT; R1-2110809, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20211111 - 20211119 6 November 2021 (2021-11-06), XP052074590, Retrieved from the Internet: URL:https://ftp.3gpp.org/tsg_ran/WG1_RL1/T SGR1_107-e/Docs/R1-2110809.zip R1-2110809.docx [retrieved on 2021-11-06] * paragraph [02.2] * | 1-4 | TECHNICAL FIELDS SEARCHED (IPC) H04B H04W |

-/--

The present search report has been drawn up for all claims

| Place of search | Date of completion of the search | Examiner |
|---|---|---|
| The Hague | 22 March 2023 | Dejonghe, Olivier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
    ...............................................................................
& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 22 20 6961

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LENOVO ET AL: "Timing Relationship for IoT NTN", 3GPP DRAFT; R1-2109322, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20211011 - 20211019 1 October 2021 (2021-10-01), XP052058275, Retrieved from the Internet: URL:https://ftp.3gpp.org/tsg_ran/WG1_RL1/T SGR1_106b-e/Docs/R1-2109322.zip R1-2109322.docx [retrieved on 2021-10-01] * paragraph [0001] * * paragraph [0002] * ----- | 1-5 | |
| X | FGI ET AL: "Timing relationship enhancements to NB-IoT NTN", 3GPP DRAFT; R1-2107292, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20210816 - 20210827 6 August 2021 (2021-08-06), XP052033538, Retrieved from the Internet: URL:https://ftp.3gpp.org/tsg_ran/WG1_RL1/T SGR1_106-e/Docs/R1-2107292.zip R1-2107292 Timing relationship enhancements to NB-IoT NTN.docx [retrieved on 2021-08-06] * paragraph [2.1.7] * * paragraph [02.3] * ----- | 1-4 | TECHNICAL FIELDS SEARCHED (IPC) |

-/--

The present search report has been drawn up for all claims

| Place of search | Date of completion of the search | Examiner |
|---|---|---|
| The Hague | 22 March 2023 | Dejonghe, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUAWEI ET AL: "Discussion on HARQ enhancement for IoT in NTN", 3GPP DRAFT; R1-2104261, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. E-meeting; 20210510 - 20210527 12 May 2021 (2021-05-12), XP052010715, Retrieved from the Internet: URL:https://ftp.3gpp.org/tsg_ran/WG1_RL1/T SGR1_105-e/Docs/R1-2104261.zip R1-2104261.docx [retrieved on 2021-05-12] * paragraph [02.2] *<br>----- | 1-5 | |

TECHNICAL FIELDS
SEARCHED        (IPC)

The present search report has been drawn up for all claims

| Place of search | Date of completion of the search | Examiner |
|---|---|---|
| The Hague | 22 March 2023 | Dejonghe, Olivier |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
...........................................................................................
& : member of the same patent family, corresponding
  document

EPO FORM 1503 03.82 (P04C01)

1